Europäisches Patentamt

European Patent Office

Office européen des brevets

(19)

(11) Veröffentlichungsnummer: **0 123 037 B1**

(12) **EUROPÄISCHE PATENTSCHRIFT**

(45) Veröffentlichungstag der Patentschrift:
20.04.88

(51) Int. Cl.⁴: **C 08 G 12/12, C 08 G 12/40, C 08 L 61/24, C 09 J 3/16**

(21) Anmeldenummer: 84101570.4

(22) Anmeldetag: 16.02.84

(54) **Verfahren zur Herstellung eines Klebers, vorzugsweise zum Kleben von cellulosehaltigen Stoffen und Textilen.**

(30) Priorität: 17.03.83 HU 89883

(43) Veröffentlichungstag der Anmeldung:
31.10.84 Patentblatt 84/44

(45) Bekanntmachung des Hinweises auf die Patenterteilung:
20.04.88 Patentblatt 88/16

(84) Benannte Vertragsstaaten:
AT BE CH DE FR GB IT LI LU NL SE

(56) Entgegenhaltungen:
DE - A - 2 037 174
FR - A - 747 688
FR - A - 1 014 808
GB - A - 2 018 794

(73) Patentinhaber: **Nyugatmagyarorszagi Fagazdasagi Kombinat, Hammerschnidt u. 1, Szombathely (HU)**
Patentinhaber: **Erdökemla Erdögazdasagi Vegyi es Ipari Vallalat, Veres Palne u. 17, Budapest (HU)**

(72) Erfinder: **Alpar, Tibor, Dr.-Ing., Szekely Bertalan u.20, H-9700 Szombathely (HU)**
Erfinder: **Györvari, Janos, Perintpari etany 4, H-9700 Szombathely (HU)**
Erfinder: **Ter, Laszlo, Nemeth Istvan u.15, H-9700 Szombathely (HU)**
Erfinder: **Buliczka-Toth, Eva, Tenkes u.3/a, H-1225 Budapest (HU)**
Erfinder: **Markovits, Imre, Schweidel u.37, H-1118 Budapest (HU)**
Erfinder: **Rischak-Nyiri, Katalin, Feherlo u.16, H-1123 Budapest (HU)**
Erfinder: **Schnitta, Antal, Menesi ut 4a, H-1118 Budapest (HU)**

(74) Vertreter: **Kraus, Walter, Dr. et al, Patentanwälte Kraus, Weisert & Partner Thomas-Wimmer-Ring 15, D-8000 München 22 (DE)**

# Beschreibung

Die Erfindung betrifft ein Verfahren zur Herstellung eines über verbesserte Eigenschaften verfügenden Klebers auf der Basis von Harnstoff-Formaldehyd-Harzen. Der Kleber ist an sich oder mit anderen, bekannten Klebern zum Kleben von cellulosehaltigen Stoffen und Textilien geeignet.

Zur Herstellung von Pressfaserplatten (Holzfaserplatten) werden zum Verkleben der cellulosehaltigen Teilchen am häufigsten Harnstoff-Formaldehyd-Harze verwendet. Für dieses Anwendungsgebiet ist wichtig, dass das Harz entsprechende Festigkeitswerte gewährleistet, seine Vernetzungszeit verhältnismässig gering ist, ferner, dass das Harz eine geeignete Viskosität aufweist und sein Gehalt an freiem Formaldehyd gering ist.

Es ist bekannt, dass durch einen Zusatz von Hexamethylentetramin zu der Lösung des Harnstoff-Formaldehyd-Harzes dessen Aushärtungsgeschwindigkeit ansteigt und der Gehalt an freiem Formaldehyd geringer ist. Das auf diese Weise behandelte Harz ist jedoch schlechter lagerbar, da die Polykondensation bereits bei Raumtemperatur beginnt.

Aus der US-PS 3 905 847 ist bekannt, dass die Bindeeigenschaften des Harzes verbessert und der im Fertigprodukt enthaltene Anteil an freiem Formaldehyd verringert wird, wenn man die Kondensation von Harnstoff und Formaldehyd in Gegenwart von Alkali- oder Erdalkalisalzen vornimmt.

Ein ähnliches Verfahren ist in DD-A 135 728 beschrieben. Gemäss diesem Verfahren wird die Polykondensation des Harnstoffs mit dem Formaldehyd in Gegenwart von Natriumchlorid als aktivem Katalysator vorgenommen. Das Salz wird, bezogen auf die Menge des fertigen Harzes, in einer Menge von 30% zugesetzt. Die Vernetzungsgeschwindigkeit des auf diese Weise modifizierten Harzes ist grösser, gleichzeitig wird weniger Formaldehyd abgespalten. Das Harz findet zur Herstellung von Pressfaserplatten Verwendung.

Ähnlich wie in den bisher zitierten Patentschriften wird auch in DE-A 2 914 009 vorgeschlagen, die Harnstoff-Formaldehyd-Kondensation in Gegenwart eines speziellen Salzkatalysators vorzunehmen. Das anorganische Salz wird dabei in einem Molverhältnis von auf das Formaldehyd bezogen 0,015–0,3 eingesetzt. Das auf diese Weise hergestellte Harz kann über längere Zeit gelagert werden und wird vorzugsweise zur Herstellung von Pressfaserplatten verwendet.

Gemäss DE-A 2 206 696 wird als Katalysator nicht das anorganische Salz an sich, sondern die aus Harnstoff und dem anorganischen Salz gebildete Verbindung verwendet.

Gemäss HU-A 178 763 schliesslich besteht die günstigste Lösung darin, als Katalysator ein Gemisch aus anorganischem Salz, Harnstoff und Formaldehyd zu verwenden. Gemäss der Beschreibung wird als Katalysator ein vorher bereitetes Gemisch aus Harnstoff, Formaldehyd und Alkali- oder Erdalkalihalogenid verwendet.

Der Katalysator wird dem im üblichen Molverhältnis bereiteten Harnstoff-Formaldehyd-Gemisch zugemischt, und erst anschliessend beginnt die Kondensation. Das fertige Harz findet zur Herstellung von Faserpressplatten Verwendung.

Ziel der Erfindung war es, ein Verfahren auszuarbeiten, mit dem ein Harnstoff-Formaldehyd-Kleber verbesserter Eigenschaften hergestellt werden kann, dessen Raumvernetzungszeit verhältnismässig kurz ist, und bei dem der Übergang vom Zustand B in den Zustand C praktisch innerhalb eines Augenblickes verläuft (B-Zustand: fortgeschrittener Kondensationsgrad härtbarer Harze, in dem diese zwar noch quellbar, aber nicht mehr löslich sind und in der Wärme so weit erweichen, dass sie durch Druck noch verformbar sind. C-Zustand: Endzustand der Vernetzung. Kunststoff-Lexikon, Verlag Carl Hanser München 1975).

Zwischen dem erfindungsgemässen Klebeharz und den bekannten Harzen besteht ferner der Unterschied, dass die Viskosität des erfindungsgemässen Harzes während der Vernetzung nicht kontinuierlich ansteigt, sondern eine bestimmte Zeit lang auf einem beinahe konstanten Wert bleibt und erst kurz vor Erreichen des C-Zustandes sprungartig ansteigt, etwa 3 Sekunden vor Eintreten der völligen Vernetzung.

Die Klebe- beziehungsweise Bindungsfestigkeit des erfindungsgemäss hergestellten Harzes ist ebenso gross wie die der literaturbekannten, für ähnliche Zwecke benutzten Harze. Gleichzeitig ist jedoch die Möglichkeit der Abspaltung von Formaldehyd während der Vernetzung geringer, und dadurch enthält das Harz weniger freies Formaldehyd.

Die genannten Vorteile werden durch folgende Massnahmen erreicht.

Das anorganische Alkali- beziehungsweise Erdalkalisalz wird nicht in einem Schritt, sondern in zwei Schritten dem Harzsystem zugesetzt. Im ersten Schritt erfolgt der Zusatz des Salzes nicht zu Beginn der Kondensation, sondern zuerst wird aus Harnstoff und Formaldehyd ein Vorkondensat gebildet. Das anorganische Salz wird erst anschliessend zugesetzt, und so entsteht aus dem Salz und dem Vorkondensat eine chemische Verbindung.

Im zweiten Schritt, im abschliessenden Abschnitt der Kondensation wird das Alkali- beziehungsweise Erdalkalisalz im Harzsystem selbst, in situ hergestellt, indem man die Salze sekundärer oder tertiärer Amine zusetzt. In dem alkalischen Medium entsteht neben dem Salz auch das Hydroxyd des Amins. Damit sind zwei Vorteile verbunden: Die Anwesenheit des anorganischen Salzes hemmt während der Raumvernetzung die Abspaltung des Formaldehyds aus der Polymerkette beziehungsweise dem Polymernetz, während das Aminhydroxyd bereits abgespaltenes Formaldehyd bindet.

Die Vernetzungszeit und die Viskosität des Harzes werden durch Zusatz einer Komposition reguliert, die aus einer borhaltigen Verbindung und einer bei der Temperatur der Raumvernetzung schnell und unter Wärmeentwicklung zerfallenden Verbindung besteht. Als Beispiele dafür seien genannt: p-Toluol- oder Benzolsulfonchloramid-natrium, Phospho-enolbrenztraubensäure, Glycerinmonophosphat, Glycerinsäure-1,3-diphosphat, Inosin-5'-triphosphat, Argininphosphat, Kreatinphosphat, Glucose-6-phosphat, Fructose-6-phosphat, Adenosintriphosphat.

Die aufgeführten Verbindungen erleiden bei der Temperatur der Raumvernetzung einen thermischen Zerfall, und die dabei freiwerdende Wärme beschleunigt die Raumvernetzung des Harzes; die Zersetzungsprodukte werden in das Polymernetz eingebaut.

In dem erfindungsgemässen Verfahren kommen als anorganische Alkali- oder Erdalkimetallsalze zum Beispiel die folgenden in Frage: NaCl, KCl, KBr, $Na_2S_2O_5$, $K_2S_2O_5$, $Na_2S_2O_4$, $K_2S_2O_4$, $Na_2SO_3$, $CaCl_2$, $MgCl_2$.

Als Salze sekundärer oder tertiärer Amine werden zum Beispiel Trimethylamin-hydrochlorid, Morpholinhydrochlorid, Methylmorpholin-hydrochlorid, Triäthylendiamin-hydrochlorid zugesetzt. Als borhaltige Verbindungen können $B_2O_3$, $H_3BO_3$ oder $Na_3BO_3$ beziehungsweise Polyborate eingesetzt werden.

Das erfindungsgemäss hergestellte Harz kann an sich als Klebeharz verwendet werden, man kann es jedoch auch im Gemisch mit bekannten Phenol-Formaldehyd-, Harnstoff-Formaldehyd- oder Melamin-Formaldehyd-Harzen verwenden.

Es ist zweckmässig, bei der Bildung des Vorkondensates den Komponenten 0,0001–0,05% einer oberflächenaktiven Substanz zuzusetzen.

Um die Haftfähigkeit des Harzes zu erhöhen, werden ihm zweckmässig während der Kondensation, bei der Einstellung des pH-Wertes Verbindungen zugesetzt, die in die entstehende Polymerkette eingebaut werden. Solche Verbindungen sind zum Beispiel Monoäthanolamin, i-Propylamin und Triäthanolamin.

Die Viskosität des fertigen Harzes kann durch den Zusatz geeigneter Verdickungsmittel erhöht werden. Als derartige Zusätze kommen zum Beispiel Kaseinsalze, wasserlösliche Cellulosesalze, Stärke, Dextrin, Bentonit, Wasserglas, Siliciumdioxyd und Roggenmehl in Frage. Die Verdikkungsmittel werden auf die Trockenmasse des Harzes bezogen in einer Menge von 0,2–5% eingesetzt.

Schliesslich werden dem Harz noch in einer Menge von 1–2% bekannte Raumvernetzungskatalysatoren, zum Beispiel Ammoniumchlorid, zugesetzt. Der pH-Wert des fertigen Harzes wird auf 7–8,5 eingestellt.

Das erfindungsgemässe Klebeharz kann auch in Form von Pulver, Paste oder Lösung hergestellt werden.

Soll pulverförmiges Harz hergestellt werden, so wird der Harnstoff nicht mit Formaldehydlösung, sondern mit Trioxan oder Paraformaldehyd umgesetzt. Der entstandene Mono- oder Dimethylolharnstoff wird abfiltriert und als Komponente A gelagert. Zur Herstellung der Komponente B werden das anorganische Salz, die Borverbindung, die in der Wärme zersetzliche Verbindung und $Na_2CO_3$ miteinander vermischt. Aus den pulverförmigen Komponenten A und B wird das erfindungsgemässe Klebeharz hergestellt, indem man aus der Komponente A eine Lösung oder Suspension bereitet und die Komponente B in diese einmischt. Der pH-Wert des Gemisches wird auf 7–8,5 eingestellt; das Harz wird bei 20–25°C 1–24 Stunden lang gerührt.

Das erfindungsgemässe Klebeharz verfügt über ausgezeichnete Klebeeigenschaften und eine während der Raumvernetzung geregelte Viskosität. Es kann mehrere Monate lang stabil gelagert werden, und während der Lagerung beziehungsweise nach der Vernetzung ist eine Abspaltung von Formaldehyd nicht zu beobachten.

Das erfindungsgemässe Verfahren zur Herstellung des Klebeharzes ist dadurch gekennzeichnet, dass man Harnstoff und Formaldehyd oder eine formaldehydabgebende Verbindung im Molverhältnis 1:1,05–1:2 in alkalischem Medium kondensiert, das Vorkondensat mit bezogen auf den Harnstoff dem 0,15–1,1fachen der äquivalenten Menge an Alkali- oder Erdalkalisalz versetzt, die Kondensation bis zum Erreichen der gewünschten Viskosität fortsetzt, dann dem Harz auf seinen Trockensubstanzgehalt bezogen 0,1–5% einer borhaltigen anorganischen Verbindung und 0,1–3% die Vernetzung regulierende organische Phosphorverbindung oder p-Toluol- beziehungsweise Benzolsulfonchloramid-natrium sowie 0,3–10% eines mit einer Mineralsäure gebildeten Salzes sekundärer oder tertiärer Amine zusetzt, den pH-Wert auf 7–8 einstellt und dann den an sich bekannten Raumvernetzungskatalysator sowie gegebenenfalls Verdickungsmittel und bekannte Phenol-, Harnstoff- oder Melaminharze zugibt.

Das erfindungsgemässe Verfahren wird an Hand der folgenden Beispiele näher erläutert.

Beispiel 1 (ohne Zusatz von Salz eines sek.- oder tert.-Amins)

In einen mit einem Rührwerk ausgerüsteten Reaktor werden 400 g Wasser eingefüllt und dort auf 35° C erwärmt. In dem Wasser werden 725 g Harnstoff gelöst. 1269 g einer 40%igen Formaldehydlösung, deren pH-Wert mit 20%iger Natronlauge auf 8,5–9,2 eingestellt wurde, wird unter kräftigem Rühren zu der Harnstofflösung gegeben. Das Gemisch wird auf 45–50°C erwärmt und bei dieser Temperatur 2 Stunden lang gehalten. Anschliessend werden noch 850 g Wasser, 750 g NaCl und – feinpulverisiert – 25 g $Na_2S_2O_5$ zugegeben.

Das Gemisch wird eine Stunde lang gerührt. Nach dem Abkühlen auf 30°C gibt man 36 g Bortrioxyd-trihydrat und 2,2 g p-Toluol-sulfonchloramid-natrium zu. Der pH-Wert wird sofort auf 7,3–7,5 eingestellt und so lange gerührt, bis alles in Lösung gegangen ist. Schliesslich wird das Gemisch mit 159,7 g Carboxymethylcellulose-natrium (als 10%ige Lösung) verrührt. Der pH-Wert wird auf 7,3–7,5 eingestellt und das Gemisch in Lagertanks gepumpt.

Das Harz wird als Klebeharz bei der Herstellung von Pressfaserplatten verwendet.

Beispiel 2

In einem mit Rührer ausgerüsteten Reaktor werden 790 g Wasser auf 35°C erwärmt und in dem Wasser 940 g Harnstoff aufgelöst. 1587 g 37%ige Formaldehydlösung, die mit 20%iger Natronlauge auf pH 8,5–9,2 eingestellt wurde, werden nach und nach zu der Harnstofflösung gegeben. Das Gemisch wird 2 Stunden lang bei 45–50°C gehalten, dann mit 940 g Kaliumchlorid und 717 g Wasser versetzt und eine weitere Stunde lang gerührt. Zu der erhaltenen Einschlussverbindung werden 46,5 g Borsäure, 13,9 g Adenosintriphosphat und 10 g Morpholinhydrochlorid gegeben. Der pH-Wert wird mit 25%iger Natronlauge auf 7–7,5 eingestellt. Schliesslich gibt man 120 g 20%ige wässrige Ammoniumkaseinatlösung sowie 48 g Roggenmehl zu dem Kleber. Nach Vermischen mit 10% Harnstoff-Formaldehyd-Harz wird das Produkt zum Kleben von Furnierplatten verwendet.

Beispiel 3

Man arbeitet auf die im Beispiel 2 beschriebene Weise, verwendet jedoch statt des Kaliumchlorides 628,7 g Kaliumbromid und statt des Adenosinphosphats 8,1 g Argininphosphat. Zu Erhöhung der Viskosität des Harzes setzt man statt Ammoniumkaseinat 80 g einer 50%igen Lösung von vorhydrolysierter Stärke zu. Der Kleber wird an sich oder im Gemisch mit 20% Phenol-Formaldehyd-Harz zur Herstellung von Pressfaserplatten verwendet.

Beispiel 4

In einem mit einem Rührwerk ausgerüsteten Autoklav wird aus 790 g Wasser, 940 g Harnstoff und 1587 g 37%igem Formaldeyhd bei 45–50°C und einem pH-Wert von 7,5–8 ein Harnstoff-Methylol-Vorkondensat bereitet. Das Gemisch wird mit 742 g KCl und 717 g Wasser versetzt und bei 20–25°C eine Stunde lang kontinuierlich gerührt. Dann gibt man zu dem Reaktionsgemisch 46,5 g $B_2O_3.3H_2O$ sowie 13,97 g Benzol-4-sulfonylchloramidnatrium und 4 g Triäthylamin-hydrochlorid und stellt den pH-Wert mit 25%iger Natronlauge auf 7–7,5 ein. Nachdem sich alles gelöst hat, werden dem Gemisch 120 g wässrige Ammoniumkaseinatlösung und 48 g Roggenmehl zugesetzt. Das Gemisch wird bis zur völligen Homogenität gerührt. Der erhaltene Kleber wird an sich oder im Gemisch mit 10% Harnstoff-Formaldehyd-Harz zum Kleben von Holzspänen benutzt.

Beispiel 5

In dem im Beispiel 1 beschriebenen Reaktor wird aus 380 g Harnstoff, 332,87 g 36,5%igem Formaldehyd und 350 g Wasser durch zweistündiges Rühren bei 45–50°C ein Vorkondensat hergestellt.

Nach Zusatz von 362,4 g Natriumchlorid und 36,5 g Natriummetabisulfit wird das Gemisch bei 25–30°C noch eine Stunde lang gerührt. Dann werden 10,2 g $H_3BO_3$, 7,3 g Argininphosphat und 5 g Methylmorpholin-hydrochlorid zugegeben, und der Inhalt des Autoklavs wird gerührt, bis alles gelöst hat. Die Masse wird mit 85 g 7%iger Carboxymethylcellulosenatriumlösung versetzt und der pH-Wert auf 7–7,3 eingestellt. Der erhaltene Kleber kann zum Warmkleben von Furnierplatten verwendet werden.

Beispiel 6

Durch Behandlung von Dolomit mit Salzsäure wird eine Mischlösung von $CaCl_2$ und $MgCl_2$ hergestellt. Die Lösung wird neutralisiert. Auf die im Beispiel 4 beschriebene Weise wird ein Vorkondensat hergestellt. Zu diesem werden 320 g des $CaCl_2/MgCl_2$-Gemisches gegeben. Der Inhalt des Reaktors wird eine Stunde lang gerührt, dann mit 1,5 g Kreatinphosphat und 10 g Triäthylendiaminhydrochlorid versetzt und so lange gerührt, bis sich alles gelöst hat. Aus vorhydrolysierter Stärke und Dextrin wird im Verhältnis 1:1 eine 60%ige Lösung hergestellt, und von dieser werden 40 g zu dem Gemisch gegeben. Nach gründlichem Homogenisieren wird der pH-Wert auf 7,5 eingestellt. Der erhaltene Kleber wird mit 40% Melamin-Formaldehyd-Harz vermischt und zum Verkleben von Holzfasern verwendet.

Beispiel 7 (Anwendungsbeispiel)

360 g des gemäss Beispiel 4 hergestellten Klebers werden mit 40 g Harnstoff-Formaldehyd-Harz (Arbacoll FK) vermischt. Das homogene Gemisch lässt man eine halbe Stunde lang stehen und setzt dann 80 g Roggenmehl zu. Das Gemisch wird erneut eine halbe Stunde stehengelassen. Nach Zusatz von 28,8 g einer 25%igen $NH_4Cl$-Lösung als Katalysator wird die Komposition mittels einer Auftragwalze in einer Menge von 120–130 g/m² auf Furnierplatten aufgetragen. Die Platten werden bei 135°C 5 Minuten lang gepresst.

Beispiel 8 (Anwendungsbeispiel)

Man arbeitet auf die im Beispiel 7 beschriebene Weise mit dem Unterschied, dass man das Ammoniumchlorid in einer Menge von 1,5% einsetzt. Der Kleber wird in einer Menge von 100–110 g/m² auf die Furnierplatten aufgebracht. Die Platten werden bei 140°C 5 Minuten lang gepresst.

Beispiel 9 (Anwendungsbeispiel)

100 kg Harnstoff-Formaldehyd-Harz (Amicol 60), 50 kg des gemäss Beispiel 5 hergestellten Klebers, 20 kg 25% Feststoff enthaltende Paraffinemulsion, 1,6 kg Ammoniumchlorid und 1,5 kg Ammoniak werden miteinander vermischt und gründlich homogenisiert. Mit dieser Masse wird Schäbe von Lein und Flachs vermischt (12% Kleber) und bei 190°C mit einem Druck von 15–18 kp/cm² ( 15–18 bar) innerhalb von 5–7 Minuten zu Platten gepresst.

**Beispiel 10 (Vergleichsbeispiel)**

Die Zeit der völligen Vernetzung (Zeit «C») wird einmal für die erfindungsgemässe Zusammensetzung (enthaltend eine Borverbindung und eine bei der Raumvernetzung sich unter Wärmeentwicklung zersetzende Verbindung) und für eine Kontrollzusammensetzung gemessen. Als Kontrollzusammensetzung wurde ein gemäss Beispiel 1 hergestelltes Harz verwendet, das jedoch die erfindungsgemässen Zusätze nicht enthält.

Während das gemäss Beispiel 1 hergestellte Harz innerhalb von 33–54" völlig aushärtete, betrug diese Zeit bei der Vergleichsprobe 1'46".

Die Entstehung der Phase «C» ging bei dem erfindungsgemässen Kleber schlagartig vonstatten, bei der Kontrollzusammensetzung hingegen allmählich. Die Viskosität steigt in der erfindungsgemässen Probe erst unmittelbar vor dem Eintreten des Zustandes «C» an, während die Kontrollprobe eine allmählich ansteigende Viskosität zeigt. Bei der erfindungsgemässen Probe tritt keine wässrige Phase auf, während bei der Kontrollprobe eine wässrige Phase beobachtet werden kann. Aus diesen vergleichenden Beobachtungen geht eindeutig hervor, dass die Raumvernetzungseigenschaften des erfindungsgemässen Harzes für die Verwendung als Kleber günstiger sind.

**Patentansprüche**

1. Verfahren zur Herstellung eines Klebers, vorzugsweise zum Kleben von cellulosehaltigen Stoffen und Textilien, durch Kondensieren von Harnstoff und Formaldehyd in Gegenwart von Alkali- oder Erdalkalisalzen, dadurch gekennzeichnet, dass man Harnstoff und Formaldehyd im Molverhältnis 1 : 1,05 – 1 : 2 in alkalischem Medium kondensiert, dem Vorkondensat in auf den Harnstoff bezogen dem 0,15–1,1fachen der äquivalenten Menge ein Alkali- oder Erdalkalisalz zusetzt, die Kondensation bis zum Erreichen des gewünschten Viskositätsgrades fortsetzt, dann dem Harz, bezogen auf seinen Trockengehalt, 0,1–5% einer borhaltigen anorganischen Verbindung, 0,1–3 % einer die Vernetzung regulierenden organischen Phosphorverbindung oder p-Toluol- oder Benzolsulfonchloramidnatrium sowie 0,3–10% des mit einer Mineralsäure gebildeten Salzes eines sekundären oder tertiären Amins und ferner an sich bekannte Raumvernetzungskatalysatoren, gegebenenfalls viskositätserhöhende Zusätze und bekannte Phenol-, Harnstoff- oder Melaminharze zusetzt.

2. Verfahren nach Anspruch 1, dadurch gekennzeichnet, dass man als borhaltige Verbindung B₂O₃·3H₂O oder H₃BO₃ verwendet.

3. Verfahren nach Anspruch 1, dadurch gekennzeichnet, dass man als die Raumvernetzung regulierende organische Phosphatverbindung Glycerinmonophosphat, Glycerinsäure-1,3-diphosphat, Inosin-5-triphosphat, Argininphosphat, Kreatinphosphat, Adenosintriphosphat, Glucose- oder Fructose-6-phosphat verwendet.

**Claims**

1. A process for the production of an adhesive, preferably for bonding cellulose-containing materials and textiles, by condensation of urea and formaldehyde in the presence of alkali metal or alkaline earth metal salts, characterised in that urea and formaldehyde are condensed in an alkaline medium in a molar ratio of 1:1.05–1:2, an alkali metal or alkaline earth metal salt is added to the precondensate in a quantity equivalent to 0.15–1.1 times the quantity of urea, the condensation is continued until the desired degree of viscosity is attained; and then there is added to the resin, related to the dry matter content thereof, 0.1 to 5% of a boron-containing inorganic compound, 0.1 to 3% of an organic phosphorus compound regulating the crosslinking or of sodium p-toluence- or benzene-sulphochloramide as well as 0.3 to 10% of a salt of a secondary or tertiary amine formed with a mineral acid and, further, three-dimensional crosslinking catalysts known per se, optionally viscosity-enhancing additives and known phenol, urea or melamine resins.

2. A process according to claim 1, characterised in that B₂O₃·3H₂O or H₃BO₃ is used as the boron-containing compound.

3. A process according to claim 1, characterised in that the organic phosphate compound regulating the three-dimensional cross-linking is glycerine monophosphate, glyceric acid 1,3-diphosphate, inosine 5-triphosphate, arginine phosphate, creatine phosphate, adenosine triphosphate, glucose 6-phoshate or fructose 6-phosphate.

**Revendications**

1. Procédé de préparation d'une colle, de préférence pour coller des matières cellulosiques et textiles, par condensation d'urée et de formaldéhyde en présence de sels alcalins ou alcalino-terreux, caractérisé en ce qu'on condense de l'urée et du formaldéhyde dans la proportion molaire de 1:1,05 à 1:2 en milieu alcalin, on ajoute au précondensat, par rapport à l'urée, 0,15 à 1,1 fois la quantité équivalente de sel alcalin ou alcalino-terreux, on poursuit la condensation jusqu'à l'obtention du degré de viscosité souhaité, et l'on ajoute alors à la résine, les pourcentages se référant à sa teneur en matière sèche, 0,1 à 5% d'un composé inorganique boré, 0,1 à 3% d'un composé phosphoré organique régulant la réticulation ou bien du p-toluène- ou benzène-sulfone-chloramide-sodium, ainsi que 0,3 à 10% du sel, formé avec un acide minéral, d'une amine seconde ou tertiaire, et en outre, des catalyseurs de réticulation stérique connus en soi, éventuellement des additifs augmentant la viscosité et des résines de phénol, d'urée ou de mélamine connues en soi.

2. Procédé selon la revendication 1, caractérisé en ce qu'on utilise, comme composé boré, $B_2O_3 \cdot 3H_2O$ ou $H_3BO_3$.

3. Procédé selon la revendication 1, caractérisé en ce qu'on utilise, comme composé phosphatique régulant la réticulation stérique, du monophosphate de glycérol, du 1,3-disphosphate d'acide glycérique, de l'inosine-5-triphosphate, du phosphate d'arginine, du phosphate de créatine, du triphosphate d'adénosine, du glucose-6-phosphate ou du fructose-6-phosphate.